(19) Europäisches Patentamt

European Patent Office

Office européen des brevets

(11) **EP 1 305 655 B1**

(12) **EUROPÄISCHE PATENTSCHRIFT**

(45) Veröffentlichungstag und Bekanntmachung des Hinweises auf die Patenterteilung:
**06.09.2006 Patentblatt 2006/36**

(51) Int Cl.:
*G02B 1/00* *(2006.01)*    *G02B 21/22* *(2006.01)*

(21) Anmeldenummer: **01971852.7**

(22) Anmeldetag: **02.08.2001**

(86) Internationale Anmeldenummer:
**PCT/EP2001/008936**

(87) Internationale Veröffentlichungsnummer:
**WO 2002/012924 (14.02.2002 Gazette 2002/07)**

(54) **OPTISCHE ANORDNUNG UND VERFAHREN ZUR ERZEUGUNG STEREOSKOPISCHER BILDER**

OPTICAL ARRANGEMENT AND METHOD FOR PRODUCING STEREOSCOPIC IMAGES

DISPOSITIF OPTIQUE ET PROCEDE PERMETTANT DE PRODUIRE DES IMAGES STEREOSCOPIQUES

(84) Benannte Vertragsstaaten:
**BE CH DE FR GB IT LI**

(30) Priorität: **04.08.2000 DE 10038133**

(43) Veröffentlichungstag der Anmeldung:
**02.05.2003 Patentblatt 2003/18**

(73) Patentinhaber: **CARL ZEISS JENA GmbH**
**07745 Jena (DE)**

(72) Erfinder:
• **WINTEROT, Johannes**
**07745 Jena (DE)**
• **KNOBLICH, Johannes**
**07747 Jena (DE)**
• **MEDER, Bernd**
**73463 Westhausen (DE)**

(56) Entgegenhaltungen:
**DE-A- 4 114 646**    **DE-A- 4 340 461**
**US-A- 5 793 524**

Bemerkungen:
Die Akte enthält technische Angaben, die nach dem Eingang der Anmeldung eingereicht wurden und die nicht in dieser Patentschrift enthalten sind.

**Beschreibung**

Die Erfindung bezieht sich auf eine optische Anordnung zur stereoskopischen Betrachtung von Objekten, ausgestattet mit einem Abbildungssystem und mit mindestens einer zwischen dem Abbildungssystem und einem betrachteten Objekt angeordneten Linsengruppe fester Brennweite zur Veränderung des Abbildungsmaßstabes.

Optische Anordnungen, die zur Abbildung von Objekten dienen, sind mit der Möglichkeit zur Fokussierung auf diese Objekte bzw. zur Scharfeinstellung der Abbildung ausgestattet, wobei sich die dafür vorgesehenen Mittel nach drei Grundprinzipien ordnen lassen:

Nach einem ersten Prinzip werden zur Scharfeinstellung das Objekt und das Abbildungssystem relativ aufeinander zu bewegt, das heißt es wird entweder das Abbildungssystem in Richtung zum Objekt oder umgekehrt das Objekt in Richtung zum Abbildungssystem verschoben, wie beispielsweise bei Mikroskopen, bei denen nach dem Prinzip der Objektivfokussierung das Objektiv verschoben oder nach dem Prinzip der Tischfokussierung der Objektträger mit dem Objekt bewegt wird.

Abweichend davon wird bei einem zweiten Prinzip die Scharfeinstellung bei gleichbleibendem Abstand zwischen Objekt und Abbildungssystem vorgenommen, indem eine optische Komponente des Abbildungssystems relativ zu anderen Komponenten des Abbildungssystems axial verschoben und so das Abbildungssystem auf das Objekt fokussiert wird. Nach diesem Prinzip arbeiten beispielsweise Feldstecher, Fotoobjektive und Videokameras.

In DE 43 40 461 A1 ist eine stereoskopische Bildaufnahmevorrichtung beschrieben, bei der ein erstes Objektiv eine Abbildung in eine erste Zwischenbildebene bewirkt, und dem ersten Objektiv eine zweite Objektivbaugruppe nachgeordnet ist, die von einem Bild in der Zwischenbildebene eine Unendlich-Abbildung bewirkt. Zum Fokussieren auf unterschiedliche Ebenen des Sehfeldes wird das erste Objektiv verschoben.

Bei optischen Anordnungen nach einem dritten Prinzip wird mit einem optischen Zusatzsystem, das zwischen dem abzubildenden Objekt und der Abbildungsebene des Abbildungssystems angeordnet ist die Übertragungslänge verändert. Auf diese Weise wird ohne Eingriff in den inneren Aufbau des Abbildungssystems und ohne Positionsänderung des Abbildungssystems relativ zum Objekt eine Anpassung an die Objektlage erzielt. In dieses Sachgebiet ist auch die nachfolgend beschriebene Erfindung einzuordnen.

Im Stand der Technik sind optische Anordnungen zur stereoskopischen Abbildung von Objekten bekannt, bei denen nach dem vorgenannten dritten Prinzip zwischen einem unverändert bleibenden Abbildungssystem und dem Objekt ein optisches Vorsatzsysteme in Form einer Linsengruppe positioniert ist, die zur Veränderung des Abbildungsmaßstabes dient.

Je nach Anwendungsfall haben derartige Vorsatzsysteme eine positive oder eine negative Brennweite. Mit solchen Vorsatzsystemen sind insbesondere Mikroskope vom Greenough-Typ ausgestattet. So sind z.B. Stereomikroskope "DV 4" und "Stemi 2000" der Carl Zeiss Jena GmbH bekannt, bei denen mit dem Vorsatzsystem ein fest vorgegebener Vergrößerungsfaktor erzielt wird.

Auch für Stereomikroskope vom Fernrohrtyp ist die Verwendung von Vorsatzsystemen bekannt, so beispielsweise bei den Stereomikroskopen "TECHNIVAL" und "CITOVAL", beschrieben in

Beyer/Riesenberg "Handbuch der Mikroskopie", Verlag Technik Berlin, 3. Auflage 1988, Seite 348 ff. Auch hier ist mit der Wahl des Vergrößerungsbereiches die Übertragungslänge definiert und eine Änderung lediglich durch Wechsel des Vorsatzsystems oder Austausch des Grundobjektivs möglich.

Dies ist nachteilig für Anwendungen, bei denen mit einer ortsfesten optischen Anordnung ein variabler Abstand zu dem zu betrachtenden Objekt überbrückt werden soll, was z.B. bei Restaurationsarbeiten erforderlich ist. Hierbei ist ein aufrechtes und seitenrichtiges Bild notwendig, was nur mit einem Abbildungsmaßstab größer "Null" erreicht werden kann.

Bekanntermaßen wird dazu entweder ein reelles Zwischenbild oder ein virtuelles Zwischenbild in der Objektebene des Stereomikroskops erzeugt. Die nachfolgend beschriebene Erfindung bezieht sich auf die Erzeugung virtueller Zwischenbilder.

Von dem dargestellten Stand der Technik ausgehend besteht die Aufgabe der Erfindung darin, Anordnungen zur stereoskopischen Abbildung von Objekten der vorbeschriebenen Art derart weiterzubilden, daß auf einfache Weise der Arbeitsabstand zu den zu beobachteten Objekten variiert werden kann und dadurch eine ermüdungsfreie Beobachtung von Objekten in verschiedenen Entfernungen möglich ist.

Erfindungsgemäß wird die Aufgabe mit den in den Ansprüchen 1 und 2 angegebenen Merkmale Gelöst.

Auf diese Weise ist es möglich, mit der Betätigung der Stelleinrichtung bzw. der Veränderung des Abstandes c unterschiedliche Vergrößerungen β' einzustellen und damit virtuelle Zwischenbilder von Objekten, die sich in unterschiedlichen Abständen innerhalb eines Arbeitsbereiches befinden, in der Abbildungsebene des feststehenden Systems zu erzeugen. So sind sehr vorteilhaft Anwendungen bei Restaurations-Arbeiten, in der Dentaltechnik sowie weitere denkbar, bei denen der mit der Erfindung erzielte höhere Gebrauchswert gewünscht wird.

Die mit einer Veränderung des Abstandes c um einen Betrag $\Delta c$ bewirkte Änderung der Übertragungslänge ist von der Brennweite des Linsensystems und damit von der Ausgangsvergrößerung β' abhängig und bewirkt eine Vergrößerungsänderung zu β'=1 hin. Eine besonders vorteilhafte Wirkung ergibt sich bei verhältnismäßig kleiner Ausgangsvergrößerung β'.

Eine Veränderung der Vergrößerung β' bzw. Fokusverschiebung tritt für alle Brennweiten $f'_{Gruppe}$ ein, wenn die Linsengruppe zwischen dem Abbildungssystem und der Fokusebene des Abbildungssystems positioniert wird. Dabei tritt die größte Dynamik durch Veränderung der Bildschnittweite a bei maximalem Abstand c ein.

In einer besonders vorteilhaften Ausgestaltung der Erfindung besteht die Linsengruppe aus zwei Linsen mit folgenden Kennwerten:

- Radien der optisch wirksamen Grenzflächen: $R_1$=-67,722 mm; $R_2$=56,249 mm; $R_3$=-3867 mm;
- Scheitelabstände der optisch wirksamen Grenzflächen auf der optischen Achse: $D_1$=2,8 mm; $D_2$=5,75 mm;
- Hauptwellenlänge λ=546 nm;
- Brechzahlen für die Hauptwellenlänge: $Ne_1$=1,60629; $Ne_2$=1,65285
- Dispersion (Abbezahl): $ve_1$=53,35; $ve_2$=33,59.

Wird eine solche Linsengruppe dem Abbildungssystem vorgesetzt, lassen sich mit der Variation des Abstandes c Änderungen der Vergrößerung β' bzw. der Schnittweiten a und b wie folgt erzielen:

| Abstand c | Vergrößerung β' | Bildschnittweite a | Objektschnittweite b | Abstand A |
|---|---|---|---|---|
| $c_1$ | 0,3 | $a_1$=93,74 | $b_1$=294,5 | - |
| $c_2$ | 0,4 | $a_2$=81,04 | $b_2$=189,1 | $A_2$=92,7 |
| $C_3$ | 0,5 | $a_3$=69,27 | $b_3$=125,9 | $A_3$=144,13 |

Besonders bevorzugt ist vorgesehen, die erfindungsgemäße optische Anordnung als Stereomikroskop vom Greenough-Typ auszubilden und dabei die Linsengruppe einschließlich der Stelleinrichtung an den Grundkörper des Stereomikroskops zu adaptieren.

Die Erfindung soll nachfolgend anhand eines Ausführungsbeispieles näher erläutert werden. Die zugehörigen Zeichnungen zeigen in

Fig.1    das Beispiel einer Linsengruppe aus zwei Linsen, ausgelegt für ein Greenough-Stereomikroskop,

Fig.2.    eine Prinzipdarstellung zur Positionierung der Linsengruppe zwischen Abbildungssystem und Objekt eines Greenough-Stereomikroskops.

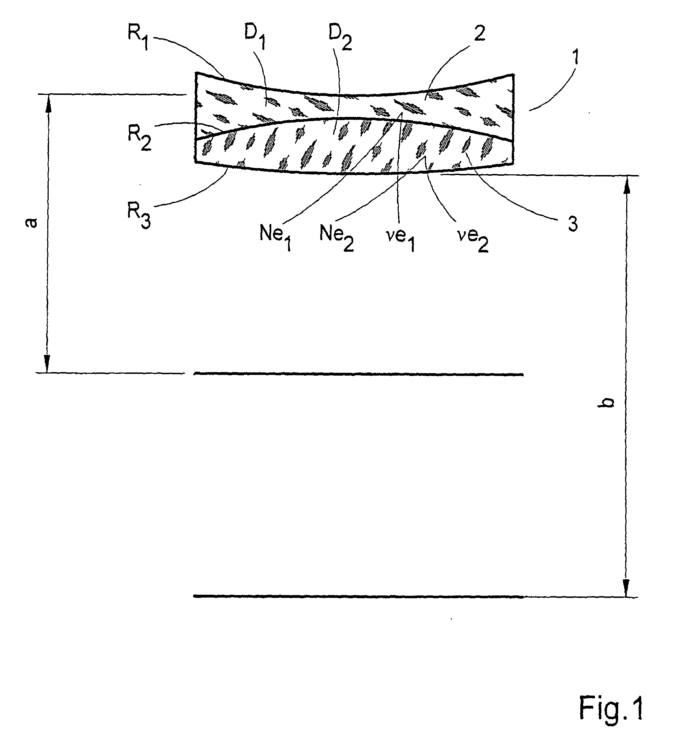

Aus Fig.1 ist die Linsengruppe 1, bestehend aus zwei Linsen 2 und 3, erkennbar. Die Linsengruppe 1 besitzt eine negative Brennweite und ist für die Hauptwellenlänge λ=546 nm ausgelegt und achromatisiert. Die optisch wirksamen Grenzflächen der Linse 2 haben die Radien $R_1$ = -67,722 mm und $R_2$= 56,249 mm. Die Linse 3 ist ausgeführt mit den Radien $R_2$=56,249 mm und $R_3$= -3867 mm. Die Scheitelabstände der optisch wirksamen Grenzflächen betragen auf der optischen Achse für die Linse 2 $D_1$=2,8 mm und für die Linse 3 $D_2$=5,75 mm.

Weiterhin hat das Material der Linse 2 eine Brechzahl von $Ne_1$=1,60629 und eine Dispersion von $ve_1$=53,35. Diese Kennwerte sind bei der Linse 3 mit $Ne_2$=1,65285 und $ve_2$=33,59 ausgelegt.

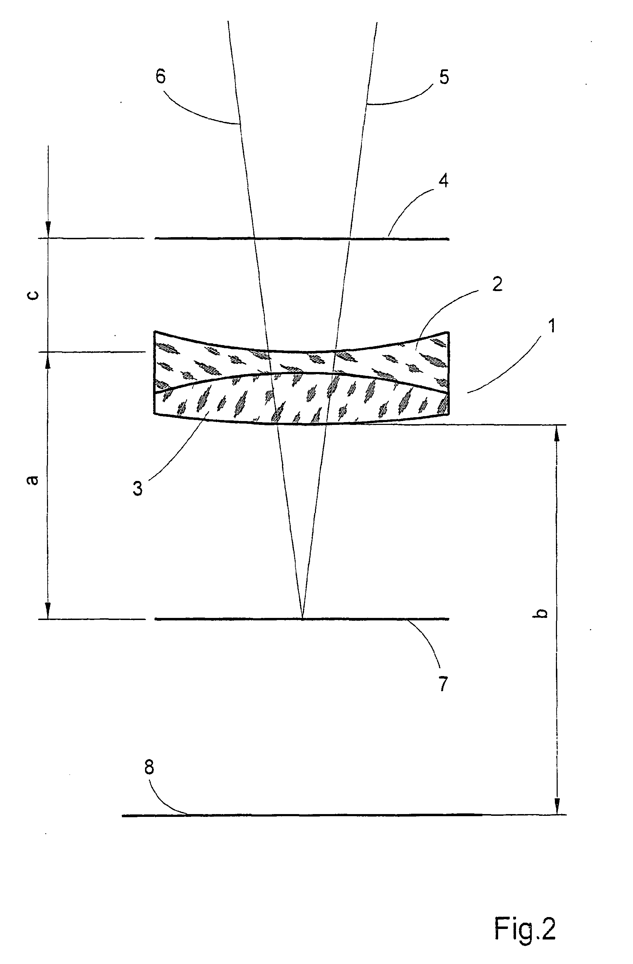

Aus Fig.2 ist ersichtlich, wie die Linsengruppe 1 relativ zum Objekt 8 und den Mikroskopstrahlengängen 5 und 6 positioniert ist. Die Position einer am Abbildungssytem vorhandenen Bezugskante 4 ist hier in Form einer Wirklinie angedeutet.

Die Summe c+a ist konstant und durch den freien Arbeitsabstand des Abbildungssystems bestimmt. Der Abstand c zwischen der Bezugskante 4 und der Linsengruppe 1 ist variabel, wobei zur Positionsänderung der Linsengruppe 1 eine Stelleinrichtung dient, die zeichnerisch nicht dargestellt ist. Derartige Stelleinrichtungen und auch deren Ankopplung an positionsveränderliche optische Baugruppen sind hinreichend bekannt, so daß eine nähere Beschreibung an dieser Stelle entfallen kann.

Zur Erläuterung der Funktionsweise ist weiterhin eingezeichnet der axiale Abstand a zwischen der Scheitelebene der Linsengruppe 1 und der Bildebene 7, in der das optische System die Abbildung eines zu beobachtenden Objektes 8 erzeugt. Als Abstand b ist die Distanz zwischen der Linsengruppe 1 und dem Objekt 8 bezeichnet. Hierbei entspricht der Abstand a der Bildschnittweite, der Abstand b entspricht der Objektschnittweite.

Die Größen für die Abstände a und b sind über die Beziehungen

$$(I) \qquad \left| 1/(-a_1-k_1)-1/(b_1-k_2)-1/f'_{Gruppe} \right| < 0,02$$

$$(II) \qquad \left| -(-a-k_1)/(b-k_2)-\beta \right| < 0,02$$

mit Konstanten $k_1$ und $k_2$ und der Brennweite $f'_{Gruppe}$ ähnlich den paraxialen Beziehungen verknüpft. Die Beziehung (I) begrenzt den Fangbereich, die Beziehung (II) formuliert die Dynamik der Vergrößerung bei Änderung der Übertragungslänge. Für das hier angegebene Beispiel gilt $k_1$=-2,52, $k_2$=- 3,29 und $f'_{Gruppe}$=-126,01.

Der Abstand A zwischen der Bezugskante 4 und dem Objekt 8 ist definiert mit A=c+b+$D_1$+$D_2$ (vergl. Fig.2). Werden nun beispielsweise Objekte beobachtet, die sich in den verschiedenen Abständen $A_2$ oder $A_3$ befinden, so kann erfindungsgemäß die optische Abbildung durch Betätigung der Stelleinrichtung, d.h. durch Variation des Abstandes c, den verschiedenen Abständen A angepaßt werden.

Beispielsweise wird bei Einstellung auf den Abstand $c_1$ ein Objekt mit der Vergrößerung β'=0,3 scharf abgebildet. Soll nun ein Objekt betrachtet werden, das sich beispielsweise in einer um den Betrag $A_2$=92,7 geringeren Entfernung von der Bezugskante 4 befindet, so wird dieses mit einer Vergrößerung β'=0,4 scharf abgebildet, wie aus der folgenden, auch im Anspruch 3 enthaltenen Tabelle ersichtlich ist:

| Abstand c | Vergrößerung β' | Bildschnittweite a | Objektschnittweite b | Abstand A |
|---|---|---|---|---|
| $c_1$ | 0,3 | $a_1$=93,74 | $b_1$=294,5 | - |
| $c_2$ | 0,4 | $a_2$=81,04 | $b_2$=189,1 | $A_2$=92,7 |
| $c_3$ | 0,5 | $a_3$=69,27 | $b_3$=125,9 | $A_3$=144,13 |

Damit ist je nach gegebenem Arbeitsabstand zwischen dem Beobachter und dem Objekt bzw. je nach Objektschnittweite b der Abstand c innerhalb eines Bereiches veränderbar, der bei $b_1$ eine Veränderung des Abbildungsmaßstabes um das 0,3-fache, bei $b_2$ um das 0,4-fache und bei $b_3$ um das 0,5-fache bewirkt.

Die Bezeichnung Abbildungsmaßstab wird in der vorstehenden Erfindungsbeschreibung im Sinne des Größenverhältnisses von Zwischenbild und Objekt verwendet.

Mit der erfindungsgemäßen Anordnung ist eine Beobachtung auch dann möglich, wenn die an sich bei Stereomikroskopen üblichen Fokussierprinzipien (Veränderung des Abstandes zwischen Abbildungssystem und Objekt) nicht anwendbar sind, wie dies beispielsweise bei Restaurationsarbeiten häufig der Fall ist.

Deshalb ist die Anwendung eines variablen Vorsatzsystems zur Überbrückung variabler Übertragungslängen, wie vorstehend anhand eines Ausführungsbeispieles der Erfindung beschrieben, bevorzugt für die Arbeit von Restaurateuren oder auch bei der Prozeßüberwachung mit festen Geräteaufbauten interessant. Weiterhin ist die Verwendung bei der zeitlich aufeinander folgenden Beobachtung und Dokumentation von Objekten unterschiedlicher Größe auf den Gebieten Qualitätssicherung, Botanik, Kriminalistik und ähnlich von Vorteil. Bevorzugt ist die Linsengruppe (1) bei der Anwendung des erfindungsgemäßen Verfahrens für einen Brennweitenbereich $f'_{Gruppe}$ von

$$-0,75 \leq \frac{a_1}{f'_{Gruppe}} \leq 1,4$$

ausgelegt, bei größtmöglicher Bildschnittweite $a_1$.

**Bezugszeichenliste**

| 1 | Linsengruppe |
|---|---|
| 2, 3 | Linse |
| 4 | Bezugskante |
| 5, 6 | Mikroskopstrahlengang |
| 7 | Bildebene |
| 8 | Objekt |
| a, b, c | Abstand |
| $R_1$, $R_2$, $R_3$ | Radius |
| $D_1$, $D_2$ | Scheitelabstand |
| $N_1$, $N_2$ | Brechzahl |

$v_1, v_2$      Dispersion

**Patentansprüche**

1. *Verfahren zur stereoskopischen Betrachtung eines Objek*tes,

   - *bei dem mittels einer Linsengruppe (1) fester Brennweite, die sich zwischen einem Abbildungssystem und dem Objekt befindet, ein virtuelles Zwischenbild erzeugt wird,* und
   - *mit einer Positionsänderung der Linsengruppe (1) zwischen dem Abbildungssystem und dem Objekt der Abbildungsmaßstab, im Bereich größer "Null" verändert wird, um das Objekt seitenrichtig und aufrecht scharf abzubilden.*

2. Optische Anordnung zur ***Ausführung des Verfahrens nach Anspruch 1 bei der*** stereoskopischen Betrachtung eines Objektes,

   - ausgestattet mit einem Abbildungssystem und mit mindestens einer zwischen dem Abbildungssystem und dem betrachteten Objekt angeordneten Linsengruppe (1) fester Brennweite zur Veränderung des Abbildungsmaßstabes, **dadurch gekennzeichnet, daß**
   - die Linsengruppe (1) mit negativer Brennweite, und ihre Position relativ zum Abbildungssystem zur Erzeugung eines *virtuellen* Zwischenbildes ausgelegt sind, und
   - eine Stelleinrichtung zur Veränderung der Position der Linsengruppe (1) in Richtung der optischen Achse und damit zur Veränderung des Abstandes c zwischen dem Abbildungssystem und der Linsengruppe (1) vorgesehen ist, so daß
   - der Abbildungsmaßstab in Bereichen größer "Null" veränderlich ist. [kein Fettdruck, kein Kursivdruck!]

3. Optische Anordnung nach Anspruch 2 , **dadurch gekennzeichnet, daß** mit der Änderung des Abstandes c. Änderungen der Vergrößerung und der Schnittweiten wie folgt eintreten:

| Abstand c | Vergrößerung β' | Bildschnittweite a | objektschnittweite b | Abstand A |
|---|---|---|---|---|
| $c_1$ | 0,3 | $a_1$=93,74 | $b_1$=294,5 | - |
| $c_2$ | 0,4 | $a_2$=81,04 | $b_2$=189,1 | $A_2$=92,7 |
| $c_3$ | 0,5 | $a_3$=69,27 | $b_3$=125,9 | $A_3$=144,13 |

4. Optische Anordnung nach Anspruch 2, **dadurch gekennzeichnet, daß** die Linsengruppe (1) aus zwei Linsen (2,3) mit folgenden Kennwerten besteht:

   - Radien der optisch wirksamen Grenzflächen: $R_1$=-67,722 mm; $R_2$=56,249 mm; $R_3$=-3867 mm;
   - Scheitelabstände der optisch wirksamen Grenzflächen auf der optischen Achse: $D_1$=2,8 mm; $D_2$=5,75 mm;
   - Hauptwellenlänge $\lambda$=546 nm;
   - Brechzahlen für die Hauptwellenlänge: $Ne_1$=1,60629; $Ne_2$=1,65285
   - Dispersion (Abbezahl): $ve_1$=53,35; $ve_2$=33,59

5. Optische Anordnung nach einem der Ansprüche 2,3 oder 4, ausgebildet als Stereomikroskop, wobei die Linsengruppe (1) einschließlich der Stelleinrichtung zur Veränderung des Abstandes c an den Grundkörper des Stereomikroskops adaptiert ist.

**Claims**

1. Method for the stereoscopic viewing of an object

   - wherein a virtual intermediate image is generated by means of a lens group (1) with a fixed focal length which is located between an imaging system and the object, and
   - by means of a change in position of the lens group (1) between the imaging system and the object, the imaging scale is changed in the range greater than "zero", in order to image the object sharply in a laterally correct and upright manner.

2. Optical arrangement for implementing the method as claimed in claim 1 in the stereoscopic viewing of an object

   - equipped with an imaging system and with at least one lens group (1) of fixed focal length which is disposed between the imaging system and the viewed object for changing the imaging scale, **characterised in that**
   - the lens group (1) with a negative focal length and the position thereof relative to the imaging system are designed to generate a virtual intermediate image, and
   - an adjusting device is provided for changing the position of the lens group (1) in the direction of the optical axis and thus for changing the distance c between the imaging system and the lens group (1), so that
   - the imaging scale is variable in ranges greater than "zero".

3. Optical arrangement as claimed in claim 2, **characterised in that** the following changes in magnification and in the back focal lengths occur with a change in the distance c:

| Distance c | Magnification $\beta'$ | Image back focal length a | Object back focal length b | Distance A |
|---|---|---|---|---|
| $c_1$ | 0.3 | $a_1$=93.74 | $b_1$=294.5 | - |
| $c_2$ | 0.4 | $a_2$=81.04 | $b_2$=189.1 | $A_2$=92.7 |
| $c_3$ | 0.5 | $a_3$=69.27 | $b_3$=125.9 | $A_3$=144.13 |

4. Optical arrangement as claimed in claim 2, **characterised in that** the lens group (1) consists of two lenses (2, 3) having the following characteristic values:

   - radii of the optically active boundary surfaces: $R_1$=-67.722 mm; $R_2$=56.249 mm; $R_3$=-3867 mm;
   - vertex distances of the optically active boundary surfaces on the optical axis: $D_1$=2.8 mm; $D_2$=5.75 mm;
   - principal wavelength $\lambda$=546 nm;
   - refractive indices for the principal wavelength: $Ne_1$=1.60629; $Ne_2$=1.65285
   - dispersion (Abbe number): $ve_1$=53.35; $ve_2$=33.59.

5. Optical arrangement as claimed in any one of claims 2, 3 or 4 formed as a stereomicroscope, wherein the lens group (1) including the adjusting device for changing the distance c is adapted to the base body of the stereomicroscope.


**Revendications**

1. Procédé pour l'observation stéréoscopique d'un objet,

   - dans lequel, au moyen d'un groupe de lentilles (1) d'une focale fixe, qui se trouve entre un système de représentation et l'objet, une image intermédiaire virtuelle est produite, et
   - avec une modification de la position du groupe de lentilles (1) entre le système de représentation et l'objet, l'échelle de représentation est modifiée dans la zone plus grande que "zéro" pour représenter l'objet d'une manière nette, non inversé et en position verticale.

2. Agencement optique pour la mise en oeuvre du procédé selon la revendication 1 lors de l'observation stéréoscopique d'un objet,

   - équipé d'un système de représentation et d'au moins un groupe de lentilles (1) disposé entre le système de représentation et l'objet observé, d'une focale fixe pour modifier l'échelle de représentation, **caractérisé en ce que** :
   - le groupe de lentilles (1) d'une focale négative et sa position relativement au système de représentation sont conçus pour produire une image intermédiaire virtuelle,
   - un dispositif de positionnement pour modifier la position du groupe de lentilles (1) dans la direction de l'axe optique et donc pour modifier l'écart c entre le système de représentation et le groupe de lentilles (1) est prévu, de sorte que

- l'échelle de représentation peut être modifiée dans des zones plus grandes que "zéro".

3. Agencement optique selon la revendication 2, **caractérisé en ce que** lors de la modification de l'écart c, des modifications de l'agrandissement et des focales frontales se produisent comme suit :

| Ecart c | agrandissement $\beta$ | Focale frontale d'image a | Focale frontale d'objet b | Ecart A |
|---------|------------------------|---------------------------|---------------------------|---------|
| $C_1$ | 0,3 | $a_1 = 93{,}74$ | $b_1 = 294{,}5$ | - |
| $C_2$ | 0,4 | $a_2 = 81{,}04$ | $b_2 = 189{,}1$ | $A_2 = 92{,}7$ |
| $C_3$ | 0,5 | $a_3 = 69{,}27$ | $b_3 = 125{,}9$ | $A_3 = 144{,}13$ |

4. Agencement optique selon la revendication 2, **caractérisé en ce que** le groupe de lentilles (1) est constitué de deux lentilles (2, 3) ayant les valeurs caractéristiques suivantes :

- rayons des faces limites optiquement actives : $R_1 = -67{,}722$ mm ; $R_2 = 56{,}249$ mm ; $R_3 = 3867$ mm ;
- écarts des sommets des faces limites optiquement actives sur l'axe optique : $D_1 = 2{,}8$ mm ; $D_2 = 5{,}75$ mm ;
- longueur d'onde principale $\lambda = 546$ nm ;
- indices de réfraction pour la longueur d'onde principale : $Ne_1 = 1{,}60629$ ; $Ne_2 : 1{,}65285$
- dispersion (coefficient d'Abbe) : $ve_1 = 53{,}35$ ; $ve_2 = 33{,}59$.

5. Agencement optique selon l'une des revendications 2, 3 ou 4, réalisé comme stéréomicroscope, où le groupe de lentilles (1) y compris le dispositif de positionnement est conçu pour modifier l'écart c au corps de base du stéréo-microscope.

Fig.1

Fig.2